# FASCICULE DE BREVET EUROPEEN

(11) **EP 0 921 287 B1**
(45) Date de publication et mention de la délivrance du brevet: **11.02.2004**
(21) Numéro de dépôt: 98403040.3
(22) Date de dépôt: 04.12.1998
(51) Int. Cl.: F02B 23/10

(54) **Moteur à combustion interne à allumage commandé et à injection directe**
Fremdgezündete Brennkraftmaschine mit Direkteinspritzung
Spark ignited internal combustion engine with direct fuel injection

(30) Priorité: 08.12.1997 FR 9715497
(43) Date de publication de la demande: 09.06.1999
(73) Titulaire: Renault s.a.s., 92100 Boulogne Billancourt (FR)
(72) Inventeur: Baudlot, François, 91210 Draveil (FR); Floch, Alain, 91460 Marcoussis (FR); Gastaldi, Patrick, 91190 Gif sur Yvette (FR); Lucas, Jean Christophe, 95000 Cergy (FR)
(74) Mandataire: Srour, Elie

(56) Documents cités:
- EP-A- 0 558 072
- EP-A- 0 778 402
- DE-A- 19 741 380
- DE-C- 926 278
- GB-A- 2 310 003
- US-A- 5 327 864

## Description

L'invention concerne un moteur à combustion interne à allumage commandé et à injection directe.

L'invention concerne plus particulièrement un moteur à combustion interne à allumage commandé et à injection directe, du type dans lequel un cylindre est délimité axialement vers le haut par une face inférieure d'une culasse dans laquelle débouchent, chacun par l'intermédiaire d'une soupape correspondante, deux conduits d'admission et deux conduits d'échappement, du type dans lequel les deux soupapes d'admission sont agencées chacune de part et d'autre d'un plan de référence qui contient l'axe du cylindre, et du type comportant un injecteur d'essence dont le nez débouche dans le cylindre entre les deux soupapes d'admission, et une bougie d'allumage implantée sensiblement au centre de la face inférieure de la culasse.

Les moteurs à combustion interne et à allumage commandé ont grand avantage à être mis en oeuvre avec un dispositif d'injection directe du carburant dans le cylindre.

En effet, l'utilisation de l'injection directe permet d'optimiser le fonctionnement du moteur avec des mélanges dits "pauvres", c'est-à-dire des mélanges carburés dans lesquels il existe un fort excès d'air par rapport à la quantité de carburant introduite dans le cylindre.

L'utilisation des mélanges pauvres permet notamment de réduire de manière importante la consommation de carburant mais aussi de réduire la température maximale atteinte au cours de la combustion, ce qui permet de diminuer la production de substances polluantes telles que les oxydes d'azote (NOx).

De même, l'excès d'air permet d'éviter qu'une partie du carburant reste imbrûlée après la combustion et soit évacuée avec les gaz d'échappement.

L'utilisation d'un mélange "pauvre" est toutefois à la source d'un certain nombre de problèmes. Notamment, l'allumage de la combustion du mélange air/carburant est rendu plus difficile du fait de la faible proportion de carburant par rapport à l'air.

Dans le but de contourner ce problème, on cherche donc à faire fonctionner les moteurs à allumage commandé, lorsqu'ils sont alimentés en mélanges "pauvres", selon le principe des charges stratifiées dans lesquelles le mélange carburé n'a pas une composition homogène dans tout le cylindre. On cherche ainsi à provoquer une plus grande concentration du carburant à proximité de la bougie d'allumage de telle sorte que l'étincelle que celle-ci produit puisse provoquer facilement le démarrage de la combustion dans le cylindre.

On connaît différentes solutions qui permettent de réaliser des charges stratifiées grâce à l'injection directe.

Une première consiste à positionner l'injecteur et la bougie de telle manière que le jet de carburant est projeté directement par l'injecteur en direction de la bougie. Cette méthode est a priori très performante mais elle est très sensible aux incertitudes de positionnement des différents éléments et, encore plus, à l'encrassement du nez d'injecteur qui peut modifier notablement les caractéristiques du jet de carburant. Au fil du temps, le moteur ainsi réalisé peut nécessiter de fréquents réglages sous peine de voir se produire de nombreux "ratés" d'allumage.

Une seconde solution connue consiste à réaliser une stratification par effet de paroi en dirigeant le jet de carburant en direction d'une paroi, par exemple la face supérieure du piston, pour le défléchir ensuite en direction de la bougie. Toutefois, avec cette solution, il peut se produire une condensation importante du carburant sur les parois, le carburant ainsi condensé étant alors très difficilement inflammable.

Le document US 5327 864 enseigne un moteur à combustion interne à injection directe à deux soupapes d'admission et deux soupapes d'échappement comprenant des moyens pour générer un mouvement tourbillonnaire de type tumble. Le piston comprenant un évidement disposé sensiblement selon un diamètre du piston et plus précisément dans l'axe du jet de carburant (à comparer avec les caractéristiques dans le préambule de la revendication 1.)

L'invention a donc pour objet de proposer une solution globale quant à la géométrie et à l'implantation des éléments essentiels d'un moteur à combustion interne et à allumage commandé qui permette d'obtenir un fonctionnement optimal du moteur avec des charges "pauvres" stratifiées.

Dans ce but, l'invention propose un moteur à combustion avec les caractéristiques selon la revendication 1.

L'injecteur est agencé de manière à projeter un jet de carburant en direction de l'évidement concave du piston ;
- l'évidement concave comporte une extension qui s'étend sensiblement selon la direction du jet de carburant projeté par l'injecteur ;
- l'axe du jet de carburant est décalé angulairement par rapport au plan de référence ;
- dans le plan de référence, l'axe du jet de carburant forme un angle sensiblement compris entre 30 et 70 degrés avec un plan perpendiculaire à l'axe du cylindre ; et
- le jet de carburant s'étend à l'intérieur d'un cône dont l'angle au sommet est sensiblement compris entre 20 et 50 degrés.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique et partielle en coupe axiale d'un moteur conforme aux enseignements de l'invention ;
- la figure 2 est une vue, de dessous selon l'axe du cylindre, de la face inférieure de la culasse du moteur de la figure 1 ;
- la figure 3 est une vue schématique en perspective illustrant la forme de la face supérieure du piston du moteur de la figure 1 ;
- la figure 4 est une vue schématique en coupe axiale illustrant une variante de réalisation de l'invention ; et
- la figure 5 est une vue similaire à celle de la figure 2 illustrant une autre variante de réalisation de l'invention.

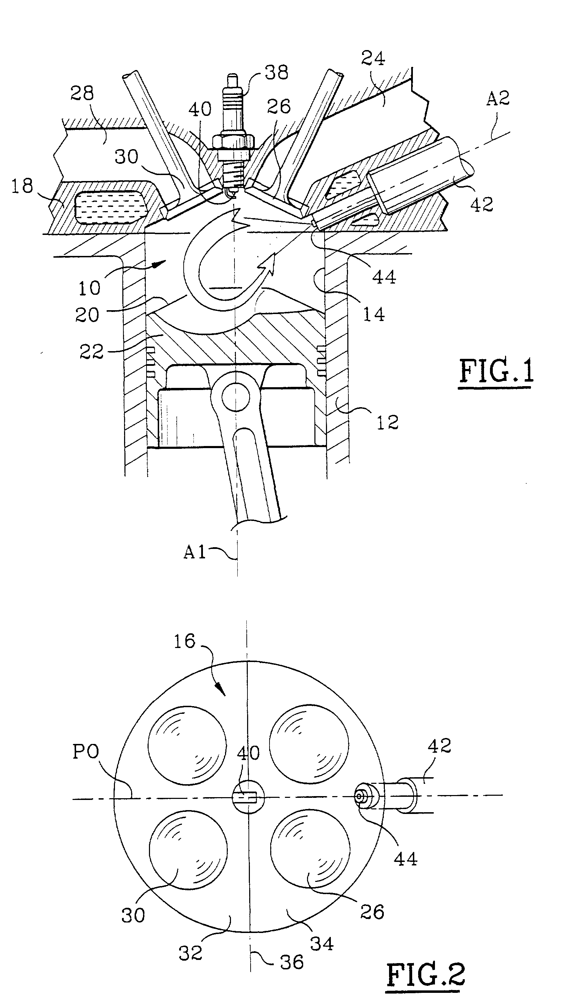

On a illustré sur la figure 1 un cylindre 10 d'un moteur à combustion interne à allumage commandé et à injection directe. Le cylindre 10, d'axe A1, est délimité dans un bloc-moteur 12 par une paroi cylindrique 14. Le cylindre 10 est délimité vers le haut par la face inférieure 16 d'une culasse 18 et, vers le bas, par la face supérieure 20 d'un piston 22 qui, de manière connue, est animé d'un mouvement alternatif de translation selon l'axe A1.

Deux conduits d'admission 24 d'air sont aménagés dans la culasse 18 de manière à déboucher dans la face inférieure 16 de celle-ci. La communication entre les conduits d'admission 24 et le cylindre 10 est autorisée ou interrompue par des soupapes d'admission commandées 26.

De la même manière, des conduits d'échappement 28 débouchent dans le cylindre 10 par l'intermédiaire de soupapes d'échappement 30.

Dans l'exemple de réalisation illustré sur les figures, la face inférieure 16 de la culasse 18 est configurée en « toit » de sorte qu'elle présente deux pans 32, 34 qui sont sensiblement plans et inclinés de part et d'autre d'une arête sommitale 36. Les conduits d'admission 24 débouchent dans l'un 34 des pans tandis que les conduits d'échappement 28 débouchent dans l'autre 32 des pans.

S'agissant d'un moteur à allumage commandé, une bougie d'allumage 38 est vissée dans la culasse 16 de telle sorte que ses électrodes 40 débouchent dans le cylindre 10, sensiblement sur l'axe A1 de celui-ci et donc au niveau de l'arête sommitale 36 de la face inférieure 16 de la culasse 18.

Par ailleurs, un injecteur 42 est implanté dans la culasse 18 de manière qu'un nez 44 de l'injecteur 42 débouche dans le cylindre 10 pour pouvoir projeter directement à l'intérieur de celui-ci un jet de carburant.

Dans ce premier mode de réalisation de l'invention, l'injecteur 42 projette un jet de carburant sensiblement conique, l'axe du jet de carburant étant sensiblement confondu avec celui A2 de l'injecteur 42 qui, comme on peut le voir sur les figures 1 et 2, forme un angle d'environ 20 à 40° avec un plan P perpendiculaire à l'axe A1 du cylindre 10. L'axe A2 de l'injecteur 42 est contenu dans un plan de référence P0 qui est celui de la figure 1, c'est-à-dire le plan perpendiculaire à l'arête sommitale 36.

Selon un premier aspect de l'invention, le cylindre 10 est muni d'au moins un conduit d'admission 24 qui comporte des moyens pour créer, au moins pour certaines un mouvement tourbillonnaire dit de « tumble » dans le cylindre 10. Ces moyens peuvent être constitués simplement par la forme du conduit d'admission 24 mais ils peuvent aussi être constitués par des moyens additionnels interposés dans le conduit d'admission, mobiles ou fixes, et susceptibles de perturber l'écoulement de l'air dans le conduit 24 pour que, à l'intérieur du cylindre 10, soit créé un mouvement tourbillonnaire qui, dans le plan de référence P0 perpendiculaire à l'arête sommitale 36, tourne autour d'un axe parallèle à cette arête 36, dans le sens anti-horaire lorsque l'on regarde le cylindre 10 de telle sorte que les soupapes d'admission sont à la droite et les soupapes d'échappement à la gauche.

Grâce au mouvement tourbillonnaire ainsi créé, illustré notamment sur la figure 1, le jet de carburant tend à être intercepté par des courants de gaz qui provoquent une accumulation de carburant au voisinage des électrodes 40 de la bougie 34. Ainsi, selon l'invention, la stratification du mélange carburé est obtenue grâce à l'aérodynamique des gaz dans le cylindre 10, en limitant le contact du carburant avec les parois du cylindre, c'est-à-dire en limitant les contacts avec la face supérieure 20 du piston 22 et avec la face latérale 14 du cylindre 10.

Selon un autre aspect de l'invention, la face supérieure 20 du piston 22 comporte un évidement concave 46 qui permet de canaliser au mieux le mouvement tourbillonnaire de « tumble » des gaz contenus dans le cylindre, notamment lors du temps de compression lorsque le piston 22 remonte dans le cylindre 10 vers sa position de point mort haut.

Cet évidement 46 peut par exemple être de forme lenticulaire et être centré par rapport à l'axe A1 du cylindre.

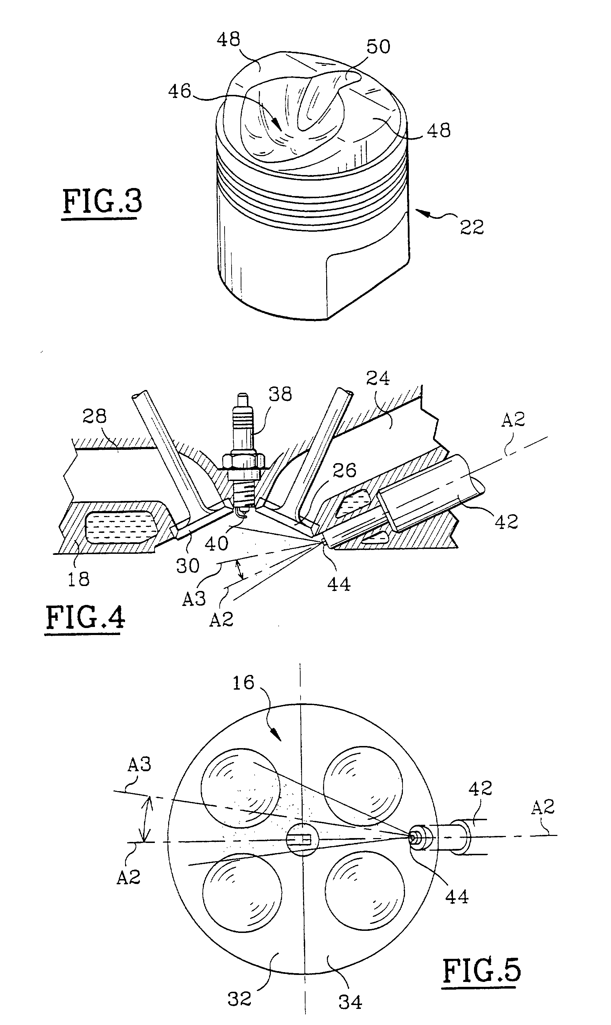

Toutefois, compte tenu du sens de rotation du mouvement tourbillonnaire de "tumble", cet évidement 46 sera avantageusement décalé par rapport à l'axe A1 de manière à être, agencé sensiblement en dessous des soupapes d'échappement 30, comme on peut le voir plus particulièrement sur la figure 3. En effet, la partie ascendante de ce mouvement des gaz est alors guidée par le côté de l'évidement 46 qui, compte tenu du décalage, se trouve presque à l'aplomb de la bougie 38.

Comme on peut le voir sur cette figure, la face supérieure 20 du piston 22 comporte par ailleurs, à l'aplomb de l'arête sommitale 36, des parties surélevées 48 qui permettent de limiter le volume résiduel du cylindre lorsque le piston 22 est au point mort haut, ceci afin d'obtenir un taux de compression adéquat des gaz.

Toutefois, il est également préférable que le jet de carburant projeté par l'injecteur 42 soit dirigé sensiblement en direction de l'évidement concave 46 afin de pouvoir interagir avec le mouvement tourbillonnaire qui est canalisé par cet évidement. Cela est d'autant plus important que, lorsque l'on souhaite réaliser une forte stratification du mélange air-carburant, l'injection du carburant est réalisée relativement tard dans le temps de compression, c'est-à-dire lorsque le piston 22 s'approche de sa position de point mort haut.

Aussi, pour que le jet de carburant atteigne l'évidement 46, qui est agencé à l'opposé de l'injecteur 42 dans le cylindre 10, sans heurter la face supérieure 20 du piston 22, on a prévu de munir l'évidement 46 d'une extension 50 qui s'étend sensiblement selon la direction du jet de carburant projeté par l'injecteur 42, en direction de celui. Les dimensions et la profondeur de cette extension, aménagée en creux entre les parties surélevées 18 de la face supérieure 20, dépendent notamment de la géométrie du jet projeté par l'injecteur 42.

De préférence, ce jet sera choisi de manière que le cône de projection présente un angle au sommet sensiblement compris entre 30 et 70 degrés.

Toutefois, les parties surélevées 48 seront aménagées de préférence de manière à ne pas provoquer d'effet de chasse lorsque le piston 22 arrive à son point mort haut. En effet, un tel effet de chasse, par lequel les gaz emprisonnés entre la face inférieure 16 de la culasse 18 et la face supérieure 20 du piston 22 se trouvent chassés selon une direction perpendiculaire à la direction de l'arête sommitale 36, peut se révéler néfaste à une bonne stratification du mélange carburé. Aussi, même dans la partie du piston 22 qui se trouve en dessous des soupapes d'admission 26, on prévoira une espace suffisant entre la face supérieure 22 du piston 20 et la face inférieure 16 de la culasse 18.

Aux figures 4 et 5, on a représenté deux variantes de réalisation de l'invention dans laquelle est utilisé un injecteur 42 qui projette un jet de carburant dont l'axe A3 est décalé angulairement par rapport à celui A2 de l'injecteur 42. Ce décalage peut, comme dans l'exemple de réalisation de la figure 4, être réalisé dans un plan contenant à la fois l'axe A1 du cylindre et l'axe A2 de l'injecteur 42 ou, comme dans l'exemple de réalisation de la figure 5, dans un plan perpendiculaire à l'axe A1 du cylindre 10.

Dans les deux cas, il s'agit alors de pouvoir optimiser d'une part la direction du jet de carburant et d'autre part l'implantation de l'injecteur 42 dans la culasse 18, ce qui permet notamment de répondre à des contraintes d'encombrement ou de refroidissement de l'injecteur 42.

Bien entendu, les deux variantes de décalage angulaire du jet de carburant peuvent être utilisées en combinaison.

Lorsque l'on utilise un injecteur 42 dont l'axe A3 de projection diffère de l'axe A2 de l'injecteur 42 en lui-même, il peut être intéressant de décentrer la cavité 46 non seulement selon une direction perpendiculaire à l'arête sommitale 36 mais également selon une direction parallèle à celle-ci.

## Revendications

1. Moteur à combustion interne à allumage commandé et à injection directe, comprenant deux conduits d'admission (24) et deux conduits d'échappement (28), du type dans lequel les deux soupapes d'admission (26) sont agencées chacune de part et d'autre d'un plan de référence (P0) qui contient l'axe (A1) du cylindre (10), et du type comportant un injecteur d'essence (40) dont le nez (42) débouche dans le cylindre (10) entre les deux soupapes d'admission (24), et une bougie d'allumage (38) implantée sensiblement au centre de la face inférieure (16) de la culasse,au moins un des conduits d'admission (24) comporte des moyens pour créer dans le cylindre (10), au moins pour certaines phases de fonctionnement du moteur, un mouvement tourbillonnaire dit de "tumble" dans lequel les gaz contenus dans le cylindre (10) sont animés d'un mouvement de rotation autour d'un axe perpendiculaire au plan de référence (P0), selon un sens anti-horaire lorsque l'on regarde le cylindre (10) de telle sorte que les soupapes d'admission (26) sont à droite et les soupapes d'échappement à gauche (30), de manière à favoriser l'entraînement du carburant en direction de la bougie (38), le cylindre (10) est délimité vers le bas par la face supérieure (20) d'un piston (22), comprenant dans sa face supérieure (20) un évidement concave (46) décentré de manière à être agencé sensiblement en dessous des soupapes d'échappement (30), **caractérisé en ce que** l'évidement comprend un bord situé au voisinage de l'aplomb de la bougie afin de guider le mouvement des gaz directement vers la bougie.

2. Moteur selon la revendication 1, **caractérisé en ce que** l'injecteur (42) est agencé de manière à projeter un jet de carburant en direction de l'évidement concave (46) du piston (20).

3. Moteur selon la revendication ou 2, **caractérisé en ce que** l'évidement concave (46) comporte une extension (50) qui s'étend sensiblement selon la direction (A2, A3) du jet de carburant projeté par l'injecteur (42).

4. Moteur selon l'une quelconque des revendications précédentes, **caractérisé en ce que** l'axe (A3) du jet de carburant est décalé angulairement par rapport au plan de référence (P0).

5. Moteur selon l'une quelconque des revendications précédentes, **caractérisé en ce que**, dans le plan de référence (P0), l'axe (A2) du jet de carburant forme un angle sensiblement compris entre 20 et 40 degrés avec un plan perpendiculaire (P) à l'axe (A1) du cylindre (10).

6. Moteur selon l'une quelconque des revendications précédentes, **caractérisé en ce que** le jet de carburant s'étend à l'intérieur d'un cône dont l'angle au sommet est sensiblement compris entre 30 et 70 degrés.

7. Moteur selon l'une quelconque des revendications précédentes, **caractérisé en ce que** la face supérieure du piston comprend en périphérie de l'évidement des parties surélevées situées sensiblement selon le diamètre perpendiculaire au pan de référence.

8. Moteur selon la revendication 7, **caractérisé en ce que** la forme des parties surélevées est choisie pour ne pas provoquer d'effet de chasse.

## Claims

1. A controlled-ignition, direct-injection internal combustion engine, comprising two intake ducts (24) and two exhaust ducts (28), of the type in which the two intake valves (26) are each arranged on either side of a reference plane (P0) which contains the axis (A1) of the cylinder (10), and of the type comprising a petrol injector (40) whose nozzle (42) communicates with the cylinder (10) between the two intake valves (24) and a spark plug (38) disposed substantially at the centre of the lower surface (16) of the cylinder head, at least one of the intake ducts (24) comprising means for creating in the cylinder (10), at least for some phases of operation of the engine, a turbulent "tumble" movement in which the gases contained in the cylinder (10) are provided with a rotary movement about an axis perpendicular to the reference plane (P0) in an anti-clockwise direction when looking at the cylinder (10) such that the intake valves (26) are on the right and the exhaust valves (30) are on the left, so as to promote the movement of the fuel in the direction of the spark plug (38), the cylinder (10) being bounded at the bottom by the upper surface (20) of a piston (22) comprising, in its upper surface (20), a concave recess (46) which is off-centre so as to be disposed substantially below the exhaust valves (30), **characterised in that** the recess comprises an edge disposed plumb in the vicinity of the spark plug in order to guide the movement of the gases directly towards the spark plug.

2. An engine as claimed in claim 1, **characterised in that** the injector (42) is disposed so as to project a fuel jet in the direction of the concave recess (46) of the piston (20).

3. An engine as claimed in claim 1 or 2, **characterised in that** the concave recess (46) comprises an extension (50) which extends substantially in the direction (A2, A3) of the fuel jet projected by the injector (42).

4. An engine as claimed in any one of the preceding claims, **characterised in that** the axis (A3) of the fuel jet is angularly offset with respect to the reference plane (P0).

5. An engine as claimed in any one of the preceding claims, **characterised in that**, in the reference plane (P0), the axis (A2) of the fuel jet forms an angle substantially of between 20 and 40° with a plane (P) perpendicular to the axis (A1) of the cylinder (10).

6. An engine as claimed in any one of the preceding claims, **characterised in that** the fuel jet extends inside a cone whose angle at its apex is substantially between 30 and 70°.

7. An engine as claimed in any one of the preceding claims, **characterised in that** the upper surface of the piston comprises, peripherally to the recess, raised portions disposed substantially along the diameter perpendicular to the reference plane.

8. An engine as claimed in claim 7, **characterised in that** the shape of the raised portions is selected so as not to cause a blast effect.

## Patentansprüche

1. Verbrennungsmotor mit gesteuerter Zündung und direkter Einspritzung, welcher zwei Einlassleitungen (24) und zwei Auslassleitungen (28) aufweist, von dem Typ, in welchem die zwei Einlassventile (26) jedes beiderseits einer Referenzebene (P0) angeordnet sind, welche die Achse (A1) des Zylinders (10) enthält, und von dem Typ, welcher eine Benzineinspritzdüse (40) aufweist, deren Vorderteil (42) in den Zylinder (10) zwischen den zwei Einlassventilen (24) mündet, und eine Zündkerze (38), welche im Wesentlichen im Zentrum der unteren Fläche (16) des Zylinderkopfes eingesetzt ist, wobei mindestens eine der Einlassleitungen (24) Mittel aufweist zum Erzeugen in dem Zylinder, mindestens für gewisse Funktionsphasen des Motors, eine Wirbelbewegung, genannt "tumble", in welcher die Gase, die in dem Zylinder (10) enthalten sind, mit einer Drehbewegung um eine rechtwinklige Achse zu der Referenzebene (P0) angeregt werden, gemäß einer Richtung gegen den Uhrzeigersinn, wenn man auf den Zylinder (10) in solch einer Weise schaut, dass die Einlassventile (26) rechts sind und die Auslassventile (30) links, in einer Weise, um den Antrieb des Treibstoffs in Richtung auf die Zündkerze (38) zu begünstigen, wobei der Zylinder (10 ) in Richtung nach unten durch die obere Fläche (20) eines Kolbens (22) begrenzt ist, wobei er auf seiner Oberfläche (20) eine konkave Ausnehmung (46) aufweist, welche in einer Weise dezentriert ist, um im Wesentlichen unterhalb der Auslassventile (30) angeordnet zu sein,
**dadurch gekennzeichnet, dass**
die Ausnehmung einen Rand aufweist, welcher in der Nähe der Senkrechten der Zündkerze angeordnet ist, um die Bewegung des Gases direkt in Richtung zu der Zündkerze zu führen.

2. Motor gemäß Anspruch 1, **dadurch gekennzeichnet, dass** die Einspritzdüse (42) in einer Weise konstruiert ist, um einen Treibstoffstrahl in Richtung der konkaven Ausnehmung (46) des Kolbens (20) zu zersprühen.

3. Motor gemäß Anspruch 1 oder 2, **dadurch gekennzeichnet, dass** die konkave Ausnehmung (46) eine Erweiterung (50) aufweist, welche sich im Wesentlichen gemäß der Richtung (A2, A3) des Treibstoffstrahls erstreckt, welcher durch die Einspritzdüse (42) eingesprüht wird.

4. Motor nach irgendeinem der vorherigen Ansprüche, **dadurch gekennzeichnet, dass** die Achse (A3) des Treibstoffstrahls winkelmäßig im Verhältnis zur Referenzebene (P0) versetzt ist.

5. Motor nach irgendeinem der vorherigen Ansprüche, **dadurch gekennzeichnet, dass** in der Referenzebene (P0) die Achse (A2) des Treibstoffstrahls einen Winkel, im Wesentlichen zwischen 20 und 40 Grad, mit einer rechtwinkligen Ebene (P) zu der Achse (A1) des Zylinders (10) bildet.

6. Motor nach irgendeinem der vorherigen Ansprüche, **dadurch gekennzeichnet, dass** der Treibstoffstrahl sich im Inneren eines Kegels erstreckt, dessen Winkel an der Spitze im Wesentlichen zwischen 30 und 70 Grad ist.

7. Motor nach irgendeinem der vorherigen Ansprüche, **dadurch gekennzeichnet, dass** die obere Fläche des Kolbens eine Peripherie der Ausnehmung von erhöhten Teilen aufweist, welche im Wesentlichen gemäß dem Durchmesser angeordnet sind, der rechtwinklig zu der Referenzebene ist.

8. Motor nach Anspruch 7, **dadurch gekennzeichnet, dass** die Form der erhöhten Teile derart gewählt ist, um keinen Ausstoß-Effekt hervorzurufen.
